# EUROPEAN PATENT APPLICATION

(11) **EP 4 353 097 A1**
(43) Date of publication of application: **17.04.2024**
(21) Application number: 22849721.0
(22) Date of filing: 20.06.2022
(51) Int. Cl.: A24F 40/40, A24F 40/46, H05B 3/26, C04B 35/111, C04B 35/14, C09D 179/08, C09D 5/16, C04B 41/48, C04B 35/64, C04B 38/00

(54) **HEAT INSULATION MATERIAL FOR AEROSOL GENERATOR, PREPARATION METHOD THEREOF, AND AEROSOL GENERATOR COMPRISING SAME HEAT INSULATION MATERIAL FOR AEROSOL GENERATOR**

(30) Priority: 29.07.2021 KR 20210100132; 16.12.2021 KR 20210180850
(71) Applicant: KT & G Corporation, Daejeon 34337 (KR)
(72) Inventor: JEONG, Jong Seong, Daejeon 34128 (KR); GO, Gyoung Min, Daejeon 34128 (KR); BAE, Hyung Jin, Daejeon 34128 (KR); SEO, Jang Won, Daejeon 34128 (KR); JANG, Chul Ho, Daejeon 34128 (KR); JUNG, Jin Chul, Daejeon 34128 (KR)
(74) Representative: Ter Meer Steinmeister & Partner
(86) International application number: PCT/KR2022/008710
(87) International publication number: WO 2023/008742

(57) **Abstract**

A heat insulation material for an aerosol generating device includes a plurality of hollow beads, and a binder configured to bind the plurality of hollow beads together.

## Description

### [Technical Field]

Embodiments relate to a heat insulation material for an aerosol generating device, a method of manufacturing the heat insulation material, and an aerosol generating device including the heat insulation material.

### [Background Art]

Recently, the demand for alternative methods to overcome the disadvantages of traditional cigarettes has increased. For example, there is growing demand for an aerosol generating device which generates aerosol by heating an aerosol generating material, rather than by combusting cigarettes. Accordingly, researches on a heating-type aerosol generating device has been actively conducted.

Some heating-type aerosol generating devices use heat insulation materials as a way to increase energy efficiency by blocking the heat generated by heaters of the aerosol generating devices from moving to the outside.

### [Disclosure]

### [Technical Problem]

Heat insulation materials including cerakwool, aerogel, and so on are applied to the general aerosol generating devices. As the heat insulation materials absorb sidestream smoke liquefied inside the aerosol generating devices, thermal conductivity of the heat insulation materials gradually increases, resulting in loss of insulation.

Accordingly, embodiments provide a heat insulation material for an aerosol generating device that has an excellent insulation effect and may prevent insulation performance from being reduced due to absorption of sidestream smoke liquefied inside the aerosol generating device, and a method of manufacturing the heat insulation material.

The technical problems of the disclosure are not limited to the aforementioned description, and other technical problems may be clearly understood by one of ordinary skill in the art from the present specification and the attached drawings.

### [Technical Solution]

A heat insulation material for an aerosol generating device, according to an embodiment, includes a plurality of hollow beads; and a binder configured to bind the plurality of hollow beads together.

A method of manufacturing a heat insulation material for an aerosol generating device, according to another embodiment, includes preparing a mixture by mixing a plurality of hollow beads with a binder, manufacturing a molded product by molding the mixture, and drying the molded product to manufacture the heat insulation material.

An aerosol generating device according to another embodiment includes an accommodation space into which an aerosol generating article is inserted, a heater configured to heat the aerosol generating article accommodated in the accommodation space, and a heat insulation material arranged outside the heater and configured to block heat generated by the heater from moving to an outside of the accommodation space, wherein the heat insulation material includes a plurality of hollow beads and a binder configured to bind the plurality of hollow beads together.

The technical solution to the problem is not limited to the above description and may include all matters that may be inferred by those skilled in the art throughout the specification.

### [Advantageous Effects]

A heat insulation material for an aerosol generating device and an aerosol generating device including the same, according to embodiments, have an excellent insulation effect and may prevent sidestream smoke liquefied inside the aerosol generating device from being absorbed into the heat insulation material, and thus, excellent insulation performance may be maintained continuously.

Also, according to a method of manufacturing a heat insulation material for an aerosol generating device, according to another embodiment, a manufacturing process is simplified and manufacturing costs may be reduced because a high-temperature sintering process is not performed.

Effects of the embodiments are not limited to the effects described above and may include all effects that may be inferred from the configuration described below.

### [Description of Drawings]

FIG. 1 is a cross-sectional view schematically illustrating an example of a heat insulation material for an aerosol generating device, according to an embodiment.
FIG. 2 is a flowchart illustrating a method of manufacturing a heat insulation material for an aerosol generating device, according to an embodiment.
FIG. 3 is a cross-sectional view schematically illustrating an example of an aerosol generating device including a heat insulation material for the aerosol generating device, according to an embodiment.
FIG. 4 is a cross-sectional view illustrating an example in which an aerosol generating article is inserted into the aerosol generating device according to the embodiment illustrated in FIG. 3.
FIGS. 5A to 5C are views illustrating images of a heat insulation material for an aerosol generating device, manufactured according to an embodiment.
FIG. 5D is an image, which is captured by a microscope, of an outer surface of a heat insulation material for an aerosol generating device, manufactured according to an example.
FIG. 6 is a graph illustrating a result of measuring a temperature change over time to measure insulation performance of a heat insulation material for an aerosol generating device, according to an embodiment.
FIG. 7 is a view schematically illustrating an example of an aerosol generating article.
FIG. 8 is a view schematically illustrating another example of an aerosol generating article.
FIG. 9 is a view schematically illustrating another example of an aerosol generating article.

### [Best Mode]

A heat insulation material for an aerosol generating device according to an embodiment includes a plurality of hollow beads; and a binder configured to bind the plurality of hollow beads together.

Each of the plurality of hollow beads may include at least one type of ceramic selected from a group including silica, alumina, glass bubble, and perlite.

Each of the plurality of hollow beads may have a diameter of 10 µm to 500 µm.

The binder may include at least one type of material selected from a group including polyimide (PI), polyetheretherketone (PEEK), polyamideimide (PAI), polyphenylsulfite (PPS), polyphenylsulfone (PPSU), polysulfone (PSU), polyethersulfone (PES), polyetherimide (PEI), polytetrafluoroethylene (PTFE), and polyvinylidene fluoride (PVDF).

The binder may occupy 20 % to 50 % of total volume of the heat insulation material.

A method of manufacturing a heat insulation material for an aerosol generating device according to another embodiment includes preparing a mixture by mixing a plurality of hollow beads with a binder, manufacturing a molded product by molding the mixture, and drying the molded product to manufacture the heat insulation material.

Each of the plurality of hollow beads may include at least one type of ceramic selected from a group including silica, alumina, glass bubble, and perlite.

Each of the plurality of hollow beads may have a diameter of 10 µm to 500 µm.

The binder may include at least one type of material selected from a group including polyimide (PI), polyetheretherketone (PEEK), polyamideimide (PAI), polyphenylsulfite (PPS), polyphenylsulfone (PPSU), polysulfone (PSU), polyethersulfone (PES), polyetherimide (PEI), polytetrafluoroethylene (PTFE), and polyvinylidene fluoride (PVDF).

The mixture may include the plurality of hollow beads and the binder in a weight ratio of 0.5 to 5:1.

The drying of the molded product may be performed at a temperature of 10 °C to 500°C.

An aerosol generating device according to another embodiment includes an accommodation space into which an aerosol generating article is inserted, a heater configured to heat the aerosol generating article accommodated in the accommodation space, and a heat insulation material arranged outside the heater and configured to block heat generated by the heater from moving to an outside of the accommodation space, wherein the heat insulation material includes a plurality of hollow beads and a binder configured to bind the plurality of hollow beads together.

The heat insulation material may be arranged between the heater and an outer housing of the aerosol generating device, and the heater may be separated from the heat insulation material.

### [Mode for Invention]

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Also, terms including ordinal numbers, such as "first" or "second" used in the present specification may be used to describe various components, and the various components should not be limited by the terms. Terms are used only to distinguish one component from another component.

Throughout the specification, an "aerosol generating device" may generate an aerosol by using an aerosol generating material to generate an aerosol that may be inhaled directly into a user's lungs through the user's mouth.

Throughout the specification, an "aerosol generating article" means an article used for smoking. For example, the aerosol generating article may be a general combustion-type cigarette that is ignited and burnt or may be a heating-type cigarette that is heated by an aerosol generating device. In another example, the aerosol generating article may also be an article that is used by heating a liquid included in a cartridge.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

Hereinafter, embodiments of the present disclosure will be described in detail with reference to the drawings.

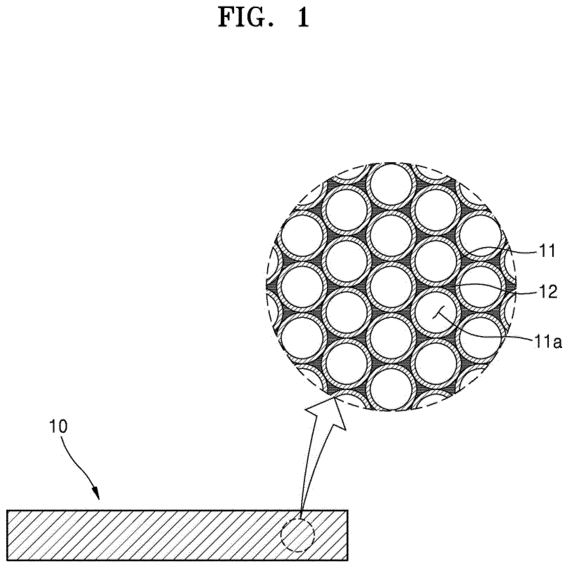

FIG. 1 is a cross-sectional view schematically illustrating an example of a heat insulation material 10 for an aerosol generating device, according to an embodiment.

Referring to FIG. 1, the heat insulation material 10 for an aerosol generating device may include a plurality of hollow beads 11 and a binder 12 that binds the plurality of hollow beads 11 together. However, the disclosure is not limited thereto, and in addition to the components illustrated in FIG. 1, other components may be further included in the heat insulation material 10 for the aerosol generating device. FIG. 1 illustrates a cross-sectional view of a sheet-shaped heat insulation material 10 for an aerosol generating device, but this is only an example, and the heat insulation material 10 for an aerosol generating device may have an appropriate shape according to a position of the heat insulation material 10, usage of the heat insulation material 10, the type of a heater of an aerosol generating device, a shape of the heater of the aerosol generating device, so on. For example, the heat insulation material 10 for an aerosol generating device may be selected from a drum shape, a cylindrical shape, a tube shape, a sheet shape, and so on but is not limited thereto.

The hollow bead 11 may include a hollow 11a therein. The hollow 1 1a of the hollow bead 11 may include air therein but is not limited thereto, and a vacuum may be formed in the hollow 1 1a of the hollow bead 11. As each of the plurality of hollow beads 11 has an empty internal space, the heat insulation material 10 for an aerosol generating device may have a lower thermal conductivity compared to a case where the plurality of hollow beads 11 have no empty internal space. Also, as each of the plurality of hollow beads 11 has an empty internal space, the heat insulation material 10 may have a lower mass compared to a case where the plurality of hollow beads 11 have no empty internal space.

The plurality of hollow beads 11 included in the heat insulation material 10 for an aerosol generating device may be regularly sphere-packed but are not limited thereto. For example, the plurality of hollow beads 11 included in the heat insulation material 10 for an aerosol generating device may also be aggregated irregularly.

The plurality of hollow beads 11 may each include ceramic with a low thermal conductivity. For example, the hollow bead 11 may each include at least one type of ceramic selected from a group including silica, alumina, glass bubble, and perlite. However, the disclosure is not limited thereto, and the hollow bead 11 made of other materials with low thermal conductivity may also be used.

A diameter of the hollow bead 11 may be about 10 µm to about 500 µm . Preferably, the diameter of the hollow bead 11 may be about 50 µm to about 450 µm, about 100 µm to about 450 µm, or about 150 µm to about 400 µm. It may be preferable that the diameter of the hollow bead 11 is about 10 µm or more, and as the diameter of the hollow bead 11 increases, the diameter of the hollow 11a also increases, and thereby insulation performance of the heat insulation material 10 for an aerosol generating device is improved. Also, it may be preferable that the diameter of the hollow bead 11 is about 500 µm or less, and as a size of the hollow bead 11 increases, a curvature of a surface increases, and thereby, it may be difficult to form the heat insulation material 10 with a uniform thickness, and durability of the heat insulation material 10 may be reduced.

In order for the heat insulation material 10 for an aerosol generating device to have uniform insulation performance over the entire region, a diameter distribution of the plurality of hollow beads 11 may have an error range of about 30 % or less compared to an average diameter. Preferably, the diameter distribution of the plurality of hollow beads 11 may have an error range of about 25 %, about 23 %, or about 21 %. More preferably, the diameter distribution of the plurality of hollow beads 11 may have an error range of about 20 %, about 18 %, about 16 %, about 14 %, about 12 %, or about 10 %. More preferably, the diameter distribution of the plurality of hollow beads 11 may have an error range of about 8 %, about 6 %, or about 5 %.

The binder 12 may be arranged between the plurality of hollow beads 11 to bind the plurality of hollow beads 11 together. The binder 12 may be arranged between the plurality of hollow beads 11 and fills the spaces that the hollow beads 11 may not fill, and thus, movement of heat may be blocked. Also, the binder 12 may prevent moisture from coming into contact with surfaces of the plurality of hollow beads 11, and thus, it is possible to prevent performance of the heat insulation material 10 for an aerosol generating device from being reduced.

The binder 12 may be made of a material with adhesion and heat resistance. For example, the binder 12 may include at least one type of polymeric material selected from a group including polyimide (PI), polyetheretherketone (PEEK), polyamidoimide (PAI), polyphenylsulfite (PPS), polyphenylsulfone (PPSU), polysulfone (PSU), polyethersulfone (PES), polyetherimide (PEI), polytetrafluoroethylene (PTFE), and polyvinylidene fluoride (PVDF). However, the disclosure is not limited thereto, and any material that has heat resistance at a certain level or higher temperature (for example, 300 °C or higher) and has a sufficient adhesion capable of binding the plurality of hollow beads 11 together may be used without limitation.

The binder 12 may occupy about 20 % to about 50 % of the total volume of the heat insulation material 10 for an aerosol generating device. When the binder 12 is less than about 20 % of the volume of the heat insulation material 10 for an aerosol generating device, a binding strength between the plurality of hollow beads 11 is reduced, and accordingly, durability of the heat insulation material 10 for an aerosol generating device may be insufficient. In addition, when the binder 12 exceeds about 50 % of the volume, the binder 12 fills pores between the plurality of hollow beads 11, and accordingly, insulation performance of the heat insulation material 10 for an aerosol generating device may be reduced. In order to increase the durability and insulation performance of the heat insulation material 10 for an aerosol generating device, the binder 12 may occupy preferably about 25 % to about 30 % of the volume.

Mainstream smoke generated by an aerosol generating article is inhaled into a user through the user's mouth. In addition, sidestream smoke is generated at an upstream end of the aerosol generating article. The sidestream smoke may not be inhaled by a user and may be liquefied inside an aerosol generating device. The liquefied sidestream smoke may be absorbed into a heat insulation material installed in an aerosol generating device, causing a decrease in insulation performance of a heat insulation material. In the heat insulation material 10 for an aerosol generating device according to the embodiment, by arranging the binder 12 between the plurality of hollow beads 11, the liquefied sidestream smoke may be prevented from being absorbed, and thus, performance of the heat insulation material 10 may be maintained continuously. Furthermore, the heat of a heater is effectively concentrated on an aerosol generating article through the heat insulation material 10 of an aerosol generating device, and thus, the taste of smoke of the generated aerosol may be increased, and preheating time of the heater and power consumption may be reduced.

A waterproof membrane may be arranged on an outer surface of the heat insulation material 10 for an aerosol generating device. For example, the waterproof membrane may include a glass film, a polyimide coating film, a water-repellent coating film, or a combination thereof. However, the waterproof membrane is not limited thereto and may include another type of coating film with a waterproof (or moisture-proof) function.

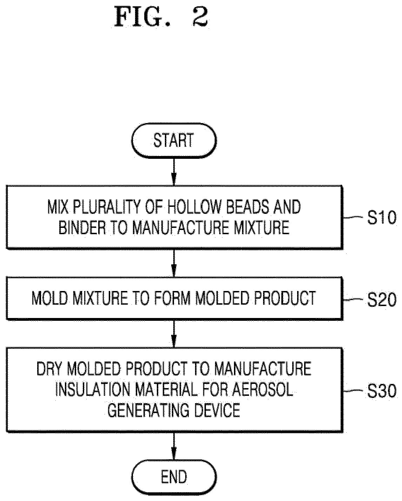

FIG. 2 is a flowchart illustrating a method of manufacturing a heat insulation material for an aerosol generating device, according to an embodiment.

Referring to FIG. 2, the method for manufacturing a heat insulation material for an aerosol generating device, according to the embodiment includes a step of mixing a plurality of hollow beads and a binder to manufacture a mixture (S10), a step of molding the mixture to form a molded product (S20), and drying the molded product to manufacture a heat insulation material for an aerosol generating device (S30). However, the method for manufacturing a heat insulation material is not limited thereto, and in addition to the steps illustrated in FIG. 2, other steps may be included in the method of manufacturing a heat insulation material for an aerosol generating device.

In step S10, a mixture may be prepared by mixing a plurality of hollow beads and a binder. However, the step S10 is not limited thereto, and in addition to the plurality of hollow beads and the binder, additives may be optionally mixed to the mixture.

The mixture may include a plurality of hollow beads and a binder mixed at a weight ratio of about 0.5 to about 5:1. The weight ratio of the hollow beads and the binder included in the mixture may be preferably about 0.7 to about 3: 1, or about 0.8 to about 2: 1. When the plurality of hollow beads included in the mixture are mixed at a weight ratio less than about 0.5:1, the binder fills pores between the plurality of hollow beads, and accordingly, insulation performance of a heat insulation material for an aerosol generating device may be reduced. Also, when the plurality of hollow beads included in the mixture exceeds a weight ratio of about 5:1, a binding strength between the plurality of hollow beads may decrease, and thereby durability of a heat insulation material for an aerosol generating device may be insufficient. In order to increase durability and insulation performance of a heat insulation material for an aerosol generating device, a plurality of hollow beads and a binder may be mixed preferably at a weight ratio of about 1 to about 1.5:1.

In step S20, a molded product may be produced by molding a mixture. The molded product may match a shape of a heat insulation material for an aerosol generating device to be finally manufactured. For example, a shape of the molded product may be selected from a drum shape, a cylindrical shape, a tube shape, a sheet shape, and so on but is not limited thereto, and an appropriate shape may be selected according to a position of a heat insulation material, the type of a heater of an aerosol generating device, a shape of the heater of the aerosol generating device, and so on.

A variety of molding methods known in the art may be applied to the method of molding the mixture, and a molding method of, for example, compression molding, injection molding, extrusion molding, thermoforming, heat melt molding, stacking molding, roll molding, or so on may be applied.

In step S30, a heat insulation material for an aerosol generating device may be manufactured by drying the molded product. In step S30, a molded product, particularly a binder included in the molded product may be dried, and the temperature for drying may be appropriately changed depending on the type of binder included in the molded product. For example, drying may be made at a temperature of about 10 to about 500 °C. Also, drying may be made at a temperature of about 50 to about 400 °C, about 70 to about 300 °C, or about 90 to about 200 °C.

Unlike the conventional method of manufacturing a heat insulation material for an aerosol generating device, the method of manufacturing a heat insulation material for an aerosol generating device according to the embodiment does not include a high-temperature (about 600 to about 1200 °C) sintering process and includes simply a process of drying a binder included in a molded product, and thus, the manufacturing process may be simplified, and manufacturing costs may be reduced.

In step S30, drying the molded product may include a plurality of steps with different drying temperatures and times. As step S30 includes the plurality of steps, a heat insulation material for an aerosol generating device being manufactured may be completely dried, and durability of the heat insulation material may be increased. For example, step S30 includes a step of drying a molded product at a temperature of about 10 to about 120 °C for about 1 minute to about 1 hour, and a step of drying the molded product at a temperature of about 120 °C to about 200 °C for about 1 minute to about 1 hour, and a step of drying the molded product at a temperature of about 200 °C to about 500 °C for about 10 seconds to 30 minutes. In another example, step S30 may include a step of drying a molded product at a temperature of about 50 °C to about 100 °C for about 5 minutes to about 30 minutes, a step of drying the molded product at a temperature of about 140 °C to 180 °C for about 5 minutes to about 30 minutes, and a step of drying the molded product at a temperature of about 250 °C to about 350 °C for about 30 seconds to about 3 minutes.

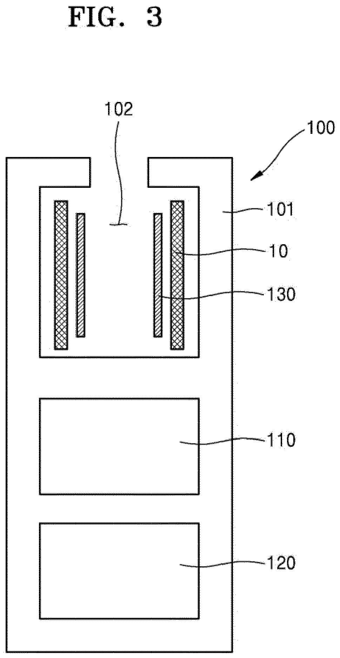

FIG. 3 is a cross-sectional view schematically illustrating an example of an aerosol generating device 100 including a heat insulation material 10 for an aerosol generating device, according to an embodiment.

Referring to FIG. 3, the aerosol generating device 100 includes a battery 110, a controller 120, a heater 130, and a heat insulation material 10 for an aerosol generating device. However, the disclosure is not limited thereto, and in addition to the components illustrated in FIG. 3, other components may be further included in the aerosol generating device 100. According to the design of the aerosol generating device 100, the arrangement of the battery 110, the controller 120, and the heater 130 may be changed.

The battery 110 supplies power used to operate the aerosol generating device 100. For example, the battery 110 may supply power such that an alternating current may be applied to the heater 130, and may supply power required to operate the controller 120. Also, the battery 110 may supply power required to operate a display, a sensor, a motor, and so on installed in the aerosol generating device 100.

The controller 120 controls all operations of the aerosol generating device 100. Specifically, the controller 120 controls not only operations of the battery 110 and the heater 130 but also operations of other components included in the aerosol generating device 100. Also, the controller 120 may check states of respective components of the aerosol generating device 100 and also determine whether the aerosol generating device 100 is in an operable state.

The controller 120 may include at least one processor. The processor may also be implemented by an array of multiple logic gates or may also be implemented by a combination of a general-purpose microprocessor and a memory device storing a program that may be executed by the microprocessor. Also, those skilled in the art may understand that the present embodiment may be implemented by other types of hardware.

The heater 130 may be heated by the power supplied from the battery 110. For example, when the aerosol generating article 200 is inserted into the aerosol generating device 100, the heater 130 may be in the outside of the aerosol generating article 200. Accordingly, the heated heater 130 may increase the temperature of an aerosol generating material in the aerosol generating article 200.

The heater 130 may be an electrical resistance heater. For example, the heater 130 may include an electrically conductive track, and as a current flows through the electrically conductive track, the heater 130 may be heated. However, the heater 130 is not limited to the example described above, and any heater that may be heated to a desired temperature may be used without limitation. Here, the desired temperature may be preset in the aerosol generating device 100, or a user may set a desired temperature.

For example, the heater 130 may include a tubular heating element, a plate-shaped heating element, a needle-shaped heating element, or a rod-shaped heating element and may heat the inside or outside of the aerosol generating article 200 according to the shape of the heater.

Also, a plurality of heaters 130 may be included in the aerosol generating device 100. In this case, the plurality of heaters 130 may be arranged to be inserted into the inside of the aerosol generating article 200 or may be arranged outside the aerosol generating article 200. Also, some of the plurality of heaters 130 may be arranged to be inserted into the inside of the aerosol generating article 200, and the others may be arranged outside the aerosol generating article 200. Also, a shape of the heater 130 is not limited to the shape illustrated in FIG. 3, and may be formed in various types.

In another example, the heater 130 may be an induction heating type heater. Specifically, the heater 130 may include an electrically conductive coil for heating the aerosol generating article 200 by an induction heating method, and the aerosol generating article 200 may include a susceptor that may be heated by the induction heating type heater. The induction heating method may refer to a method of heating a magnetic material by applying an alternating magnetic field of which direction changes periodically to the magnetic material that generates heat by an external magnetic field.

When the alternating magnetic field is applied to the magnetic material, energy loss due to eddy current loss and hysteresis loss may occur in the magnetic material, and the lost energy may be emitted from the magnetic material as heat energy. The larger the amplitude or frequency of the alternating magnetic field applied to the magnetic material, more heat energy may be emitted from the magnetic material. The aerosol generating device 100 may emit heat energy from a magnetic material by applying an alternating magnetic field to the magnetic material and may transfer the heat energy emitted from the magnetic material to the aerosol generating article 200.

A magnetic material that generates heat by an external magnetic field may be a susceptor. The susceptor may be provided in the aerosol generating device 100 in the form of a piece, flake, or strip. For example, at least a part of the heater 130 arranged inside the aerosol generating device 100 may be formed of a susceptor material.

At least a part of the susceptor material may be formed of a ferromagnetic substance. For example, the susceptor material may include metal or carbon. The susceptor material may include at least one of ferrite, ferromagnetic alloy, stainless steel, and aluminum (Al). Also, the susceptor material may also include at least one of ceramic, such as graphite, molybdenum, silicon carbide, niobium, a nickel alloy, a metal film, or zirconia, a transition metal, such as nickel (Ni) or cobalt (Co), and a metalloid, such as boron (B) or phosphorus (P).

The aerosol generating device 100 may accommodate the aerosol generating article 200. An accommodating space 102 for accommodating the aerosol generating article 200 may be formed in the aerosol generating device 100. The heater 130 may be provided in the accommodation space 102 for accommodating the aerosol generating article 200. For example, the heater 130 may have a cylindrical accommodation space 102 for accommodating the aerosol generating article 200 therein. Accordingly, when the aerosol generating article 200 is accommodated in the aerosol generating device 100, the aerosol generating article 200 may be accommodated in the accommodation space 102 of the heater 130.

The heater 130 may surround at least a part of an outer surface of the aerosol generating article 200 accommodated in the aerosol generating device 100. For example, the heater 130 may surround a tobacco medium included in the aerosol generating article 200. Accordingly, heat may be transferred from the heater 130 to the tobacco medium more efficiently.

The heater 130 may heat the aerosol generating article 200 accommodated in the aerosol generating device 100. As described above, the heater 130 may heat the aerosol generating article 200 by an induction heating method. The heater 130 may include a susceptor material that generates heat by an external magnetic field, and the aerosol generating device 100 may apply an alternating magnetic field to the heater 130.

Although not illustrated in FIG. 3, a coil may be included in the aerosol generating device 100. The coil may apply an alternating magnetic field to the heater 130. When power is supplied to the coil by the aerosol generating device 100, a magnetic field may be formed inside the coil. When an alternating current is applied to the coil, a direction of the magnetic field formed inside the coil may continuously change. When the heater 130 is inside the coil and exposed to an alternating magnetic field of which direction changes periodically, the heater 130 may generate heat to heat the aerosol generating article 200 accommodated in the accommodation space 102 of the heater 130.

The coil may be wound around an outer surface of the heater 130. Also, the coil may be wound around an inner surface of an outer housing 101 of the aerosol generating device 100. The heater 130 may be placed in an internal space formed by winding a coil. When power is supplied to the coil, the alternating magnetic field generated by the coil may be applied to the heater 130.

The coil may extend in a longitudinal direction of the aerosol generating device 100. The coil may extend to an appropriate length along the longitudinal direction. For example, the coil may extend to a length corresponding to the length of the heater 130, or may be extended to a length greater than a length of the heater 130.

The coil may be placed in a position suitable for applying an alternating magnetic field to the heater 130. For example, the coil may be placed in a position corresponding to the heater 130. The efficiency with which the alternating magnetic field of the coil is applied to the heater 130 may be increased by the size and arrangement of the coil.

When the amplitude or frequency of the alternating magnetic field formed by the coil is changed, the degree to which the heater 130 heats the aerosol generating article 200 may also be changed. Because the amplitude or frequency of the magnetic field generated by the coil may be changed by the power applied to the coil, the aerosol generating device 100 may control heating of the aerosol generating article 200 by adjusting the power applied to the coil. For example, the aerosol generating device 100 may control the amplitude and frequency of the alternating current applied to the coil.

For example, the coil may be implemented by a solenoid. The coil may be a solenoid wound around an inner surface of an external housing 101 of the aerosol generating device 100, and the heater 130 and the aerosol generating article 200 may be placed in an inner space of the solenoid. A material of a conductor constituting the solenoid may be copper (Cu). However, the solenoid is not limited thereto, and an alloy including any one or at least one of silver (Ag), gold (Au), aluminum (Al), tungsten (W), zinc (Zn), and nickel (Ni) may be a material of the conductors constituting the solenoid.

Although not illustrated in FIG. 3, the aerosol generating device 100 may further include a vaporizer. The vaporizer may generate an aerosol by heating a liquid composition, and the generated aerosol may pass through the aerosol generating article 200 and be transferred to a user. In other words, the aerosol generated by the vaporizer may move along an airflow passage of the aerosol generating device 100, and the airflow passage may be configured such that the aerosol generated by the vaporizer passes through the aerosol generating article 200 and be transferred to a user.

For example, the vaporizer may include a liquid storage, a liquid transfer portion, and a heating element but is not limited thereto. For example, the liquid storage, the liquid transfer portion, and the heating element may also be included in the aerosol generating device 100 as independent modules.

The liquid storage may store a liquid composition. For example, the liquid composition may be a liquid including a tobacco-containing substance including a volatile tobacco flavor component or may also be a liquid including a non-tobacco substance. The liquid storage may be detachable from or attachable to the vaporizer or may be made integrally with the vaporizer.

For example, the liquid compositions may include water, a solvent, ethanol, plant extracts, fragrance, a flavoring agent, or a vitamin mixture. The fragrance may include menthol, peppermint, spearmint oil, or various fruit flavor ingredients but is not limited thereto. The flavoring agent may include ingredients that may provide various types of flavor or savor to a user. The vitamin mixture may be a mixture of at least one of vitamin A, vitamin B, vitamin C, and vitamin E but is not limited thereto. Also, the liquid composition may include an aerosol former, such as glycerin or propylene glycol.

The liquid transfer portion may transfer a liquid composition of the liquid storage to the heating element. For example, the liquid transfer portion may be a wick, such as cotton fiber, ceramic fiber, glass fiber, or porous ceramic but is not limited thereto.

The heating element may heat the liquid composition transferred by the liquid transfer portion. For example, the heating element may be a metal heating wire, a metal heating plate, a ceramic heater, or so on but is not limited thereto. Also, the heating element may be composed of a conductive filament, such as a nichrome wire, and may have a structure that is wound around the liquid transfer portion. The heating element may be heated by an electric current and may transfer heat to the liquid composition in contact with the heating element, and thereby, the liquid composition may be heated. As a result, an aerosol may be generated.

For example, the vaporizer may be referred to as a cartomizer or an atomizer but is not limited thereto.

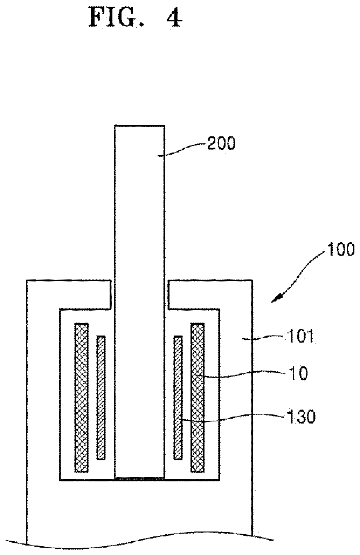

FIG. 4 is a cross-sectional view illustrating an example in which the aerosol generating article 200 is inserted into the aerosol generating device 100 according to the embodiment illustrated in FIG. 3.

Referring to FIG. 4, the heat insulation material 10 may be arranged outside the heater 130 to block the heat generated by the heater 130 from moving to the outside of the accommodation space 102. The heat insulation material 10 may be arranged between the external housing 101 and the heater 130 to prevent heat of the aerosol generating device 100 from being lost. FIG. 4 illustrates an example in which the heat insulation material 10 of a tubular shape is arranged outside the heater 130 of a tubular shape but is not limited thereto. Any heat insulation material that may block the heat generated by the heater 130 from moving to the outside of the accommodation space 102 may be used as the heat insulation material 10 without limitation.

The heat insulation material 10 may cause the heat generated by the heater 130 to be concentrated on the aerosol generating article 200, and thereby, heating efficiency of the heater 130 may be increased, and the taste of smoke of the aerosol generating article 200 may be increased. Also, the heat insulation material 10 may reduce the preheating time of the aerosol generating device 100 and reduce power consumption.

The heat insulation material 10 may be arranged between the heater 130 and the external housing 101 of the aerosol generating device 100, and the heater 130 may be separated from the heat insulation material 10. An air layer may be formed in a space formed by separating the heater 130 from the heat insulation material 10, and thus, performance of blocking the movement of the heat generated by the heater 130 may be increased. In particular, when the heater 130 has a cylindrical shape surrounding an outer surface of the aerosol generating article 200, a large area of the heater 130 is adjacent to the external housing 101 of the aerosol generating device 100, and accordingly, the heat generated by the heater 130 is easily transferred to the outside of the aerosol generating device 100, and thereby, a user may feel hot or other components may be adversely affected. Because the heater 130 is separated from the heat insulation material 10, the heat generated by the heater 130 is not directly transferred to the heat insulation material 10, and thus, insulation performance may be further increased.

### Example 1-1. Manufacture of Heat insulation material for Aerosol Generating Device (Thickness of 0.8 mm, Internal Diameter of 8.5 mm)

A mixture was prepared by mixing glass bubbles and a polyimide binder at a weight ratio of 1.2:1. A molded product was manufactured by molding the mixture into a tubular shape with a wall thickness of 0.8 mm and an inner diameter of 8.5 mm. The molded product was first dried at a temperature of 80 °C for 10 minutes, secondly dried at a temperature of 160 °C for 10 minutes, and thirdly dried at a temperature of 300 °C for 1 minute to prepare a heat insulation material for an aerosol generating device.

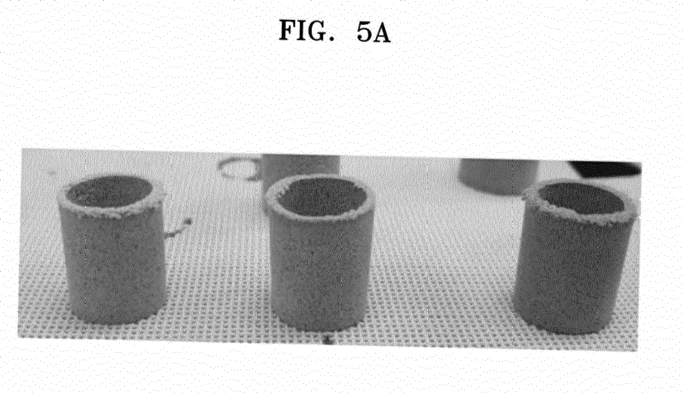

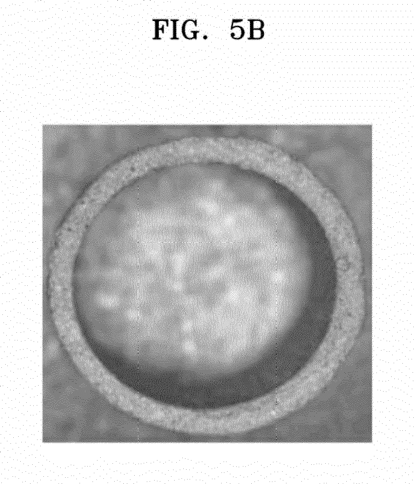

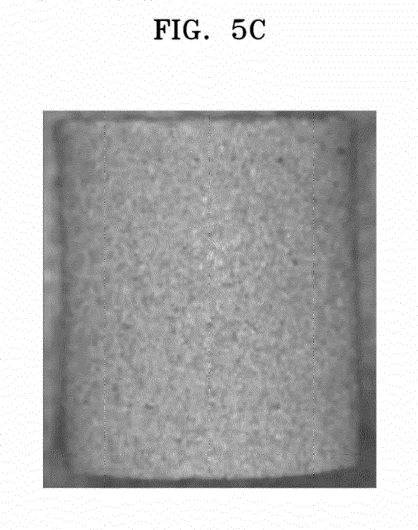

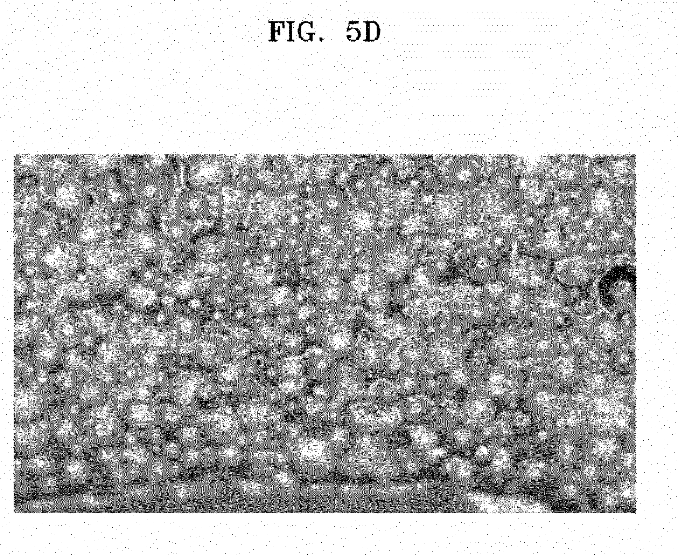

FIGS. 5A to 5C are view illustrating images of the heat insulation material for an aerosol generating device, manufactured in Example 1-1. FIG. 5A is an image of the entire appearance of the heat insulation material for an aerosol generating device, manufactured in Example 1-1, FIG. 5B is an image of the heat insulation material for an aerosol generating device viewed from a longitudinal direction, and FIG. 5C is an image of the heat insulation material for an aerosol generating device viewed from a direction perpendicular to the longitudinal direction. FIG. 5D is an image, which is captured by a microscope, of an outer surface of a heat insulation material for an aerosol generating device, manufactured in Example 1-1.

Referring to FIGS. 5A to 5D, it can be seen that the heat insulation material for an aerosol generating device maintains a tubular shape by a binder bound with a plurality of hollow beads.

### Example 1-2. Manufacture of Heat insulation material for Aerosol Generating Device (Thickness of 0.8 mm, Internal Diameter of 9.0 mm)

A heat insulation material for an aerosol generating device was manufactured in the same manner as Example 1-1, except that a molded product with an inner diameter of 9.0 mm was manufactured.

### Example 2-1. Manufacture of Heat insulation material for Aerosol Generating Device (Thickness of 1.0 mm, Internal Diameter of 8.1 mm)

A heat insulation material for an aerosol generating device was manufactured in the same manner as Example 1-1, except that a molded product with a wall thickness of 1.0 mm and an inner diameter of 8.1 mm was manufactured.

### Example 2-2. Manufacture of Insulation for Aerosol Generating Device (Thickness of 1.0 mm, Inner Diameter of 8.5 mm)

A heat insulation material for an aerosol generating device was manufactured in the same manner as Example 1-1, except that a molded product with a wall thickness of 1.0 mm and an inner diameter of 8.5 mm was manufactured.

### Example 2-3. Manufacture of Heat insulation material for Aerosol Generating Device (Thickness of 1.0 mm, internal diameter of 9.0 mm)

A heat insulation material for an aerosol generating device was manufactured in the same manner as Example 1-1, except that a molded product with a wall thickness of 1.0 mm and an inner diameter of 9.0 mm was manufactured.

### Experimental Example 1. Measurement of Thermal Insulation Effectiveness of Heat insulation material for Aerosol Generating Device

A film heater (0.700 ± 0.035Ω) of an electrical resistance tubular type was installed on an inner surface of a heat insulation material for a tube-shaped aerosol generating device which is manufactured according to Example 1-1 to Example 2-3, and a module for measuring an insulation effect was manufactured by installing a SUS pipe on an inner surface of the film heater. A voltage of 2.5 V was applied to the film heater of a tubular type to heat the film heater such that an average saturation temperature increases to 290 °C, and a temperature change of the SUS pipe was measured over time.

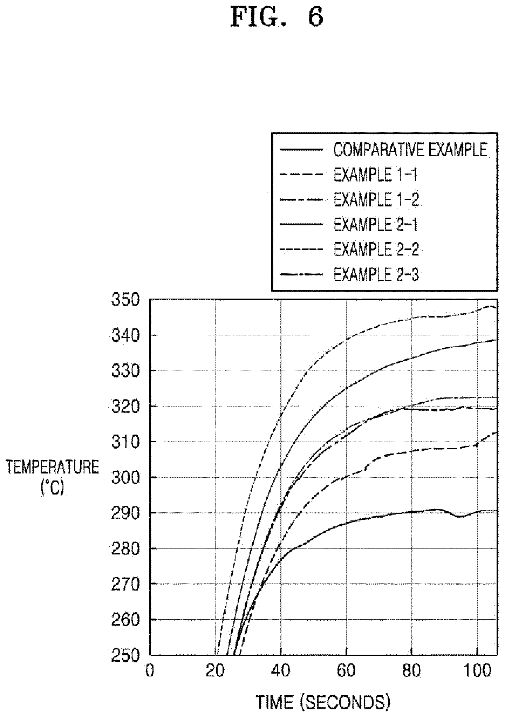

FIG. 6 is a graph illustrating a result of measuring the temperature change over time, which was measured in Experimental Example 1. The graph of FIG. 6 shows temperature change for each type of heat insulation materials for an aerosol generating device used in the module for measuring insulation effects. A comparative example shows a module in which the heat insulation material for an aerosol generating device is not used.

Referring to FIG. 6, it can be seen from the examples that an average saturation temperature was increased by about 30 °C compared to the comparative example. Also, an average saturation temperature of Example 1-1 and Example 1-2 with a wall thickness of 0.8 mm was measured to be about 322 °C, whereas an average saturation temperature of Example 2-1 to Example 2-3 with a wall thickness of 1.0 mm was measured to be about 335 °C.

Therefore, it can be seen that average saturation temperatures of examples including heat insulation materials were measured to be higher than an average saturation temperature of a comparative example not including the heat insulation material, and thus, the examples including heat insulation materials have an excellent insulation effects. Also, it can be seen that insulation performance increases as a thickness of a heat insulation material increases.

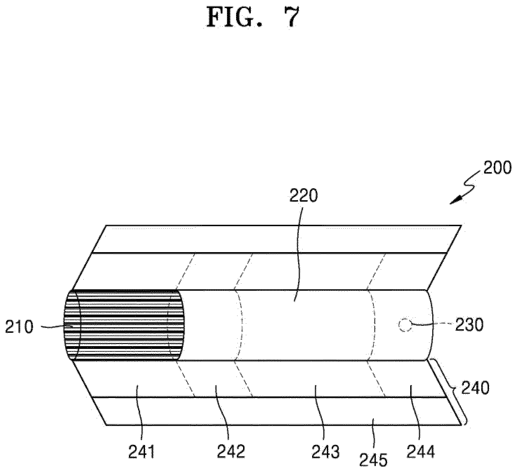

Hereinafter, examples of aerosol generating articles that may be used in an aerosol generating device according to an embodiment are described with reference to FIGS. 7 to 9.

FIG. 7 is a view schematically illustrating an example of the aerosol generating article 200.

Referring to FIG. 7, the aerosol generating article 200 may include a tobacco rod 210 and a filter rod 220. FIG. 7 illustrates that the filter rod 220 includes a single segment. However, the filter rod 220 is not limited thereto. In other words, the filter rod 220 may include a plurality of segments. For example, the filter rod 220 may include a first segment configured to cool an aerosol and a second segment configured to filter a certain component included in the aerosol. Also, as necessary, the filter rod 220 may further include at least one segment configured to perform other functions.

The aerosol generating article 200 may be packaged using at least one wrapper 240. The wrapper 240 may have at least one hole through which external air may be introduced or internal air may be discharged. For example, the aerosol generating article 200 may be packaged by one wrapper 240. As another example, the aerosol generating article 200 may be doubly packaged by two or more wrappers 240. For example, the tobacco rod 210 may be packaged by a first wrapper 241, and the filter rod 220 may be packaged by wrappers 242, 243, 244. Also, the entire aerosol generating article 200 may be re-packaged by another single wrapper 245. When the filter rod 220 includes a plurality of segments, each segment may be packaged by wrappers 242, 243, 244.

The tobacco rod 210 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 210 may include other additives, such as flavors, a wetting agent, and/or organic acid. Also, the tobacco rod 210 may include a flavored liquid, such as menthol or a moisturizer, which is injected to the tobacco rod 210.

The tobacco rod 210 may be manufactured in various forms. For example, the tobacco rod 210 may be formed as a sheet or a strand. Also, the tobacco rod 210 may be formed as a pipe tobacco, which is formed of tiny bits cut from a tobacco sheet. Also, the tobacco rod 210 may be surrounded by a heat conductive material. For example, the heat conductive material may be, but is not limited to, a metal foil such as aluminum foil. For example, the heat conductive material surrounding the tobacco rod 210 may uniformly distribute heat transmitted to the tobacco rod 210, and thus, the heat conductivity applied to the tobacco rod may be increased and taste of the tobacco may be improved. Also, the heat conductive material surrounding the tobacco rod 210 may function as a susceptor heated by the induction heater. Here, although not illustrated in the drawings, the tobacco rod 210 may further include an additional susceptor, in addition to the heat conductive material surrounding the tobacco rod 210.

The filter rod 220 may include a cellulose acetate filter. Shapes of the filter rod 220 are not limited. For example, the filter rod 220 may include a cylinder-type rod or a tube-type rod having a hollow inside. Also, the filter rod 220 may include a recess-type rod. When the filter rod 220 includes a plurality of segments, at least one of the plurality of segments may have a different shape.

The filter rod 220 may be formed to generate flavors. For example, a flavoring liquid may be injected onto the filter rod 220, or an additional fiber coated with a flavoring liquid may be inserted into the filter rod 220.

Also, the filter rod 220 may include at least one capsule 230. Here, the capsule 230 may generate a flavor or an aerosol. For example, the capsule 230 may have a configuration in which a liquid containing a flavoring material is wrapped with a film. For example, the capsule 230 may have a spherical or cylindrical shape, but is not limited thereto.

When the filter rod 220 includes a segment configured to cool the aerosol, the cooling segment may include a polymer material or a biodegradable polymer material. For example, the cooling segment may include pure polylactic acid alone, but the material for forming the cooling segment is not limited thereto. In some embodiments, the cooling segment may include a cellulose acetate filter having a plurality of holes. However, the cooling segment is not limited to the above-described example and is not limited as long as the cooling segment cools the aerosol.

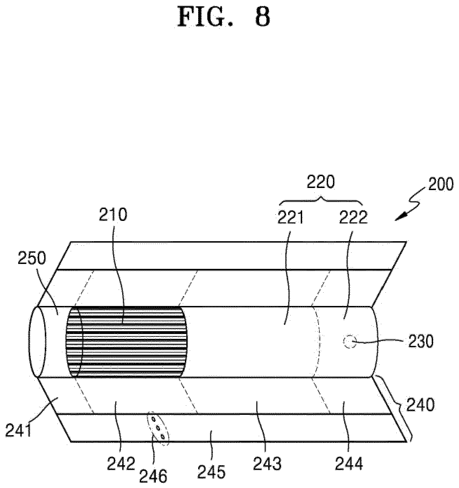

FIG. 8 is a view schematically illustrating another example of the aerosol generating article 200.

Referring to FIG. 8, the aerosol generating article 200 may further include a front-end plug 250. The front-end plug 250 may be on one side of the tobacco rod 210 opposite to the filter rod 220. The front-end plug 250 may prevent the tobacco rod 210 from deviating from the aerosol generating article 200 and prevent a liquefied aerosol from flowing into an aerosol generating device from the tobacco rod 210 during smoking.

The filter rod 220 may include a first segment 221 and a second segment 222. Here, the first segment 221 may correspond to the first segment of the filter rod 220 in FIG. 7, and the second segment 222 may correspond to the second segment of the filter rod 220 in FIG. 7.

A diameter and entire length of the aerosol generating article 200 may correspond to the diameter and entire length of the aerosol generating article 200 of FIG. 7. For example, a length of the front-end plug 250 may be about 7 mm, a length of the tobacco rod 210 may be about 15 mm, a length of the first segment 221 may be about 12 mm, and a length of the second segment 222 may be about 14 mm, but the disclosure is not limited thereto.

The aerosol generating article 200 may be wrapped by at least one wrapper 240. At least one hole may be formed in the wrapper 240 through which external air flows in or internal gas flows out. For example, the front-end plug 250 may be wrapped by a first wrapper 241, the tobacco rod 210 may be wrapped by a second wrapper 242, the first segment 221 may be wrapped by a third wrapper 243, and the second segment 222 may be wrapped by a fourth wrapper 244. In addition, the aerosol generating article 200 may be entirely wrapped by a fifth wrapper 245.

Also, at least one perforation 246 may be formed in the fifth wrapper 245. For example, the perforation 246 may be formed in a region surrounding the tobacco rod 210 but is not limited thereto. The perforation 246 may serve to transfer the heat generated by a heater to the inside of the tobacco rod 210.

Also, the second segment 222 may include at least one capsule 230. Here, the capsule 230 may generate flavor or an aerosol. For example, the capsule 230 may have a structure in which a liquid including fragrance is wrapped by a film. The capsule 230 may have a spherical shape or a cylindrical shape but is not limited thereto.

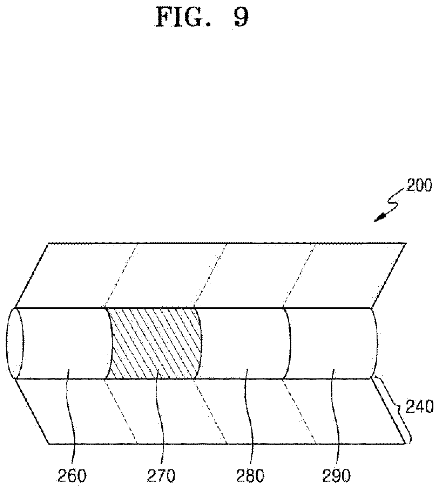

FIG. 9 is a view schematically illustrating another example of the aerosol generating article 200.

Referring to FIG. 9, the aerosol generating article 200 may include a first portion 260, a second portion 270, a third portion 280, and a fourth portion 290. Specifically, the first portion 260, the second portion 270, the third portion 280, and the fourth portion 290 may respectively include an aerosol generating element, a tobacco element, a cooling element, and a filter element. For example, the first portion 260 may include an aerosol generating material, the second portion 270 may include a tobacco material and moisturizer, the third portion 280 may cool an airflow passing through the first portion 260 and the second portion 270, and the fourth portion 290 may include a filter material.

Referring to FIG. 9, the first portion 260, the second portion 270, the third portion 280, and the fourth portion 290 may be sequentially arranged in a longitudinal direction of the aerosol generating article 200. Here, the longitudinal direction of the aerosol generating article 200 may be a direction in which a length of the aerosol generating article 200 extends. For example, the longitudinal direction of the aerosol generating article 200 may be from the first portion 260 toward the fourth portion 290. Accordingly, an aerosol generated by at least one of the first portion 260 and the second portion 270 may form an airflow by sequentially passing through the first portion 260, the second portion 270, the third portion 280, and the fourth part 290, and thus, a smoker may inhale an aerosol from the fourth portion 290.

The first portion 260 may include an aerosol generating element. Also, the first portion 260 may also include other additives, such as a flavoring agent, a humectant, and/or organic acid, and may include a flavoring liquid, such as menthol or moisturizer. Here, the aerosol generating element may include at least one of, for example, glycerin, propylene glycol, ethylene glycol, dipropylene glycol, diethylene glycol, triethylene glycol, tetraethylene glycol, and oleyl alcohol.

The first portion 260 may include a crimped sheet, and the aerosol generating element may be included in the first portion 260 in a state of being impregnated into the crimped sheet. Also, other additives, such as a flavoring agent, a humectant, and/or organic acid, and the flavoring liquid may be included in the first portion 260 in a state of being absorbed into the crimped sheet.

The crimped sheet may be a sheet composed of a polymer material. For example, the polymer material may include at least one of paper, cellulose acetate, lyocell, and polylactic acid. For example, the crimped sheet may be a paper sheet that does not generate off-flavor due to heat even when heated to a high temperature. However, the crimped sheet is not limited thereto.

The first portion 260 may extend from a distal end of the aerosol generating article 200 to points of about 7 to about 20 mm, and the second portion 270 may extend from a point where the first portion 260 ends to points of about 7 to about 20 mm. However, the disclosure is not limited to the numerical range, and the lengths in which the first portion 260 and the second portion 270 extend may be appropriately adjusted within a range that may be easily changed by a person skilled in the art.

The second portion 270 may include a tobacco element. The tobacco element may be a certain type of tobacco material. For example, the tobacco element may have a form of tobacco cut leaves, tobacco particle, tobacco sheet, tobacco bead, tobacco granule, tobacco powder, or tobacco extract. The tobacco material may also include at least one type of, for example, tobacco leaves, tobacco vein, puffed tobacco, cut leaves, cut plate leaves, and reconstituted tobacco.

The third portion 280 may cool an airflow passing through the first portion 260 and the second portion 270. The third portion 280 may be made of a polymer material or a biodegradable polymer material and may have a cooling function. For example, the third portion 280 may be made of polylactic acid (PLA) fiber but is not limited thereto. Alternatively, the third portion 280 may be made of a cellulose acetate filter in which a plurality of holes are formed. However, the third portion 280 is not limited to the example described above, and any material that performs a function of cooling an aerosol may be used for the third portion 280 without limitation. For example, the third portion 280 may be a tube filter or branch filter having a hollow.

The fourth portion 290 may include a filter material. For example, the fourth portion 290 may be a cellulose acetate filter. In addition, a shape of the fourth portion 290 is not limited. For example, the fourth portion 290 may be a cylindrical rod or a tube-type rod having a hollow therein. Also, the fourth portion 290 may be a recess type rod. When the fourth portion 290 includes a plurality of segments, at least one of the plurality of segments may have a different shape from others.

The fourth portion 290 may generate flavor. For example, a flavoring liquid may be sprayed to the fourth portion 290, or a separate fiber coated with a flavoring liquid may also be inserted into the fourth portion 290.

The aerosol generating article 200 may include a wrapper 240 surrounding at least some of the first portion 260 to the fourth portion 290. Also, the aerosol generating article 200 may include the wrapper 240 surrounding all of the first portion 260 to the fourth portion 290. The wrapper 240 may be placed on an outermost side of the aerosol generating article 200 and may be a single wrapper or a combination of multiple wrappers.

For example, the first portion 260 of the aerosol generating article 200 may include a crimped corrugated sheet including an aerosol generating material, the second portion 270 may include cut plate leaves as a tobacco material and glycerin as a moisturizer, the third portion 280 may include a branch pipe, and the fourth portion 290 may include cellulose acetate fiber but are not limited thereto.

Those of ordinary skill in the art related to the present embodiments may understand that various changes in form and details can be made therein without departing from the scope of the characteristics described above. Therefore, the disclosed methods should be considered in a descriptive point of view, not a restrictive point of view. The scope of the present disclosure is defined by the appended claims rather than by the foregoing description, and all differences within the scope of equivalents thereof should be construed as being included in the present disclosure.

## Claims

1. A heat insulation material for an aerosol generating device, the heat insulation material comprising:
a plurality of hollow beads; and
a binder configured to bind the plurality of hollow beads together.

2. The heat insulation material of claim 1, wherein each of the plurality of hollow beads includes at least one type of ceramic selected from a group including silica, alumina, glass bubble, and perlite.

3. The heat insulation material of claim 1, wherein each of the plurality of hollow beads has a diameter of 10 µm to 500 µm.

4. The heat insulation material of claim 1, wherein the binder includes at least one type of material selected from a group including polyimide (PI), polyetheretherketone (PEEK), polyamideimide (PAI), polyphenylsulfite (PPS), polyphenylsulfone (PPSU), polysulfone (PSU), polyethersulfone (PES), polyetherimide (PEI), polytetrafluoroethylene (PTFE), and polyvinylidene fluoride (PVDF).

5. The heat insulation material of claim 1, wherein the binder occupies 20 % to 50 % of total volume of the heat insulation material.

6. A method of manufacturing a heat insulation material for an aerosol generating device, the method comprising:
preparing a mixture by mixing a plurality of hollow beads with a binder;
manufacturing a molded product by molding the mixture; and
drying the molded product to manufacture the heat insulation material.

7. The method of claim 6, wherein each of the plurality of hollow beads includes at least one type of ceramic selected from a group including silica, alumina, glass bubble, and perlite.

8. The method of claim 6, wherein each of the plurality of hollow beads has a diameter of 10 µm to 500 µm.

9. The method of claim 6, wherein the binder includes at least one type of material selected from a group including polyimide (PI), polyetheretherketone (PEEK), polyamideimide (PAI), polyphenylsulfite (PPS), polyphenylsulfone (PPSU), polysulfone (PSU), polyethersulfone (PES), polyetherimide (PEI), polytetrafluoroethylene (PTFE), and polyvinylidene fluoride (PVDF).

10. The method of claim 6, wherein the mixture includes the plurality of hollow beads and the binder in a weight ratio of 0.5 to 5:1.

11. The method of claim 6, wherein the drying of the molded product is performed at a temperature of 10 °C to 500 °C.

12. An aerosol generating device comprising:
an accommodation space into which an aerosol generating article is inserted;
a heater configured to heat the aerosol generating article accommodated in the accommodation space; and
a heat insulation material arranged outside the heater and configured to block heat generated by the heater from moving to an outside of the accommodation space,
wherein the heat insulation material includes a plurality of hollow beads and a binder configured to bind the plurality of hollow beads together.

13. The aerosol generating device of claim 12, wherein
the heat insulation material is arranged between the heater and an outer housing of the aerosol generating device, and
the heater is separated from the heat insulation material.
